# EUROPEAN PATENT APPLICATION

(11) **EP 4 657 655 A1**
(43) Date of publication of application: **03.12.2025**
(21) Application number: 24213916.0
(22) Date of filing: 19.11.2024
(51) Int. Cl.: H01Q 1/32, H01Q 1/52, H01Q 13/02, H01Q 21/06, H01Q 23/00

(54) **SIDE RADAR ANTENNA INCLUDING QUASI ARTIFICIAL MAGNETIC CONDUCTORS**

(30) Priority: 31.05.2024 US 202418680539
(71) Applicant: Aptiv Technologies AG, 8200 Schaffhausen (CH)
(72) Inventor: BLAUERT, John Karl, Westfield, IN, 46074 (US)
(74) Representative: Manitz Finsterwald Patent- und Rechtsanwaltspartnerschaft mbB

(57) **Abstract**

An antenna assembly configured to steer a radio frequency (RF) signal to a focus area offset from an azimuth center. A conductive top plate of the assembly includes: an outer surface and an inner surface facing a waveguide plate; a plurality of antennas defined within the outer surface and aligned with a waveguide, the plurality of antennas are configured to direct the RF signal to the focus area offset from the azimuth center; and a plurality of grooves are defined within the outer surface spaced apart from the plurality of antennas, at least one of the plurality of grooves is between two of the plurality of antennas. The plurality of grooves are configured to provide RF boundaries between the plurality of antennas.

## Description

### FIELD

The present disclosure relates to a side radar antenna including quasi artificial magnetic conductors.

### BACKGROUND

This section provides background information related to the present disclosure, which is not necessarily prior art.

Radar uses electromagnetic signals to detect and track objects. The electromagnetic signals are transmitted and received using one or more antennas. An antenna may be characterized in terms of gain and beam width, or more specifically pattern, which is a measure of the gain as a function of direction. By modifying the radiation pattern, the antenna may be customized for a specific application. For example, the radiation pattern may be offset from center for a side radar application. With respect to automotive applications in particular, radars are typically assembled in compact packages with antennas thereof in close proximity to each other.

### SUMMARY

This section provides a general summary of the disclosure, and is not a comprehensive disclosure of its full scope or all of its features.

The present disclosure provides for, in various features, an antenna assembly configured to steer a radio frequency (RF) signal to a focus area offset from an azimuth center. The antenna assembly includes: a circuit board including an integrated circuit configured to process the RF signal, and a conductive trace extending from the integrated circuit; a waveguide plate over the circuit board, the waveguide plate including a waveguide configured to guide the RF signal at least one of to and from the conductive trace; and a conductive top plate over the waveguide plate. The conductive top plate includes: an outer surface and an inner surface facing the waveguide plate, the outer surface is opposite to the inner surface; a plurality of antennas defined within the outer surface and aligned with the waveguide, the plurality of antennas configured to direct the RF signal to the focus area offset from the azimuth center; and a plurality of grooves defined within the outer surface spaced apart from the plurality of antennas, at least one of the plurality of grooves is between two of the plurality of antennas, the plurality of grooves configured to provide RF boundaries between the plurality of antennas.

In further features, the plurality of antennas include a plurality of receiver antennas and a plurality of transmitter antennas.

In further features, the antenna assembly includes more of the plurality of receiver antennas than the plurality of transmitter antennas.

In further features, the plurality of receiver antennas are aligned on the outer surface in a first column and the plurality of transmitter antennas are aligned on the outer surface in a second column that is spaced apart from, and parallel to, the first column.

In further features, each one of the plurality of antennas and each one of the plurality of grooves extend parallel to one another.

In further features, at least one of the plurality of grooves is not between two of the plurality of antennas.

In further features: the plurality of antennas include a plurality of receiver antennas and a plurality of transmitter antennas; the plurality of grooves include receiver grooves adjacent to the plurality of receiver antennas and transmitter grooves adjacent to the plurality of transmitter antennas; and the receiver grooves are deeper than the transmitter grooves.

In further features, the receiver antennas and the transmitter antennas have a common width.

In further features, the plurality of grooves include a plurality of posts spaced apart along a length of each one of the plurality of grooves.

In further features, each one of the plurality of posts has a height dimension, a width dimension, and a depth dimension with the height dimension being greater than each one of the width dimension and the depth dimension.

In further features, the plurality of grooves includes first grooves of a first depth and second grooves of a second depth that is deeper than the first depth, each one of the first grooves is between one of the plurality of antennas and one of the second grooves, and each one of the second grooves is between one of the plurality of antennas and one of the first grooves.

The present disclosure also includes, in various features, an antenna assembly configured to steer a radio frequency (RF) signal to a focus area offset from an azimuth center. The antenna assembly includes: a circuit board including an integrated circuit configured to process the RF signal, and a conductive trace extending from the integrated circuit; a waveguide plate over the circuit board, the waveguide plate including a waveguide configured to guide the RF signal at least one of to and from the conductive trace; and a conductive top plate over the waveguide plate. The conductive top plate includes: an outer surface and an inner surface facing the waveguide plate, the outer surface is opposite to the inner surface; a plurality of receiver antennas aligned with the waveguide; a plurality of receiver grooves defined by the outer surface spaced apart from the receiver antennas, one of the plurality of receiver antennas is between two of the plurality of receiver grooves, the plurality of receiver grooves configured to provide RF boundaries between the plurality of receiver antennas; a plurality of transmitter antennas aligned with the waveguide; and a plurality of transmitter grooves defined by the outer surface spaced apart from the transmitter antennas, one of the plurality of transmitter antennas is between two of the plurality of transmitter grooves, the plurality of transmitter grooves configured to provide RF boundaries between the plurality of transmitter antennas.

In further features, the plurality of receiver grooves are deeper than the plurality of transmitter grooves.

In further features, the plurality of receiver grooves and the plurality of transmitter grooves have an equal width.

In further features, two of the plurality of transmitter grooves are between two of the plurality of transmitter antennas.

In further features, the plurality of receiver grooves and the plurality of transmitter grooves include spaced apart posts.

In further features, the plurality of receiver grooves includes first grooves of a first depth and second grooves of a second depth that is deeper than the first depth, each one of the first grooves is between one of the plurality of receiver antennas and one of the second grooves, and each one of the second grooves is between one of the plurality of receiver antennas and one of the first grooves.

The present disclosure further includes, in various features, an antenna assembly configured to steer a radio frequency (RF) signal to a focus area offset from an azimuth center. The antenna assembly includes: a circuit board including an integrated circuit configured to process the RF signal, and a conductive trace extending from the integrated circuit; a waveguide plate over the circuit board, the waveguide plate including a waveguide configured to guide the RF signal at least one of to and from the conductive trace; and a conductive top plate over the waveguide plate. The conductive top plate includes: an outer surface and an inner surface facing the waveguide plate, the outer surface is opposite to the inner surface; a plurality of receiver antennas aligned with the waveguide and arranged in a first column; a plurality of receiver grooves defined by the outer surface spaced apart from the receiver antennas, one of the plurality of receiver antennas is between two of the plurality of receiver grooves, the plurality of receiver grooves configured to provide RF boundaries between the plurality of receiver antennas; a plurality of transmitter antennas aligned with the waveguide and arranged in a second column extending parallel to the first column; and a plurality of transmitter grooves defined by the outer surface spaced apart from the transmitter antennas, one of the plurality of transmitter antennas is between two of the plurality of transmitter grooves, the plurality of transmitter grooves configured to provide RF boundaries between the plurality of transmitter antennas. Wherein the plurality of receiver grooves are deeper than the plurality of transmitter grooves.

In further features, the plurality of receiver grooves are aligned in the first column and the plurality of transmitter grooves are aligned in the second column.

In further features, the plurality of receiver grooves and the plurality of transmitter grooves include spaced apart posts.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of select embodiments and not all possible implementations, and are not intended to limit the scope of the present disclosure.
FIG. 1 illustrates a radar assembly in accordance with the present disclosure configured as a side radar mounted at an exemplary installation site on a vehicle;
FIG. 2 is an exploded view of the antenna assembly of FIG. 1;
FIG. 3A is a plan view of a conductive top plate of the antenna assembly of FIG. 1;
FIG. 3B is a perspective view of the conductive top plate;
FIG. 4 is a cross-sectional view taken along line 4-4 of FIG. 3A;
FIG. 5 is a cross-sectional view taken along line 5-5 of FIG. 3A;
FIG. 6 is a cross-sectional view of an additional conductive top plate in accordance with the present disclosure;
FIG. 7 is a plan view of a conductive top plate of another antenna assembly in accordance with the present disclosure;
FIG. 8 is a perspective view of an area of the conductive top plate of FIG. 7;
FIG. 9 is a graph illustrating an exemplary beam vector pattern of an antenna assembly in accordance with the present disclosure;
FIG. 10 is a graph illustrating magnitude and azimuth angle of an exemplary antenna assembly in accordance with the present disclosure; and
FIG. 11 is a graph illustrating magnitude and elevation angle of an exemplary antenna assembly in accordance with the present disclosure.

Corresponding reference numerals indicate corresponding parts throughout the several views of the drawings.

### DETAILED DESCRIPTION

Example embodiments will now be described more fully with reference to the accompanying drawings.

Side radars may be configured to steer radio frequency (RF) signals towards a particular area to optimize performance. The present disclosure provides for an antenna assembly configured to steer the RF signals to a focus area offset from an azimuth center of the antenna assembly. A conductive top plate of the antenna assembly defines a plurality of antennas. A step extends from each antenna to an outer surface of the top plate. The step is configured to steer the RF signals to emanate from the outer surface towards the focus area. To prevent, or at least reduce, coupling of energy between antennas of the conductive top plate, the present disclosure provides for quasi artificial magnetic conductors (AMCs) in the form of grooves defined by the conductive top plate. The grooves are arranged between the antenna receptacles. The quasi-AMC grooves are configured to effectively provide a fence around each antenna to isolate the different antennas and eliminate or reduce overlap of antenna energy from the different antennas. As a result, the present disclosure provides for a smoother radiation pattern with less variation between antennas and reduced angle error, thereby improving correlation and facilitating calibration. Depth of the grooves and distance between the grooves and the antenna receptacles may be varied to generate a customized radiation pattern, as explained herein.

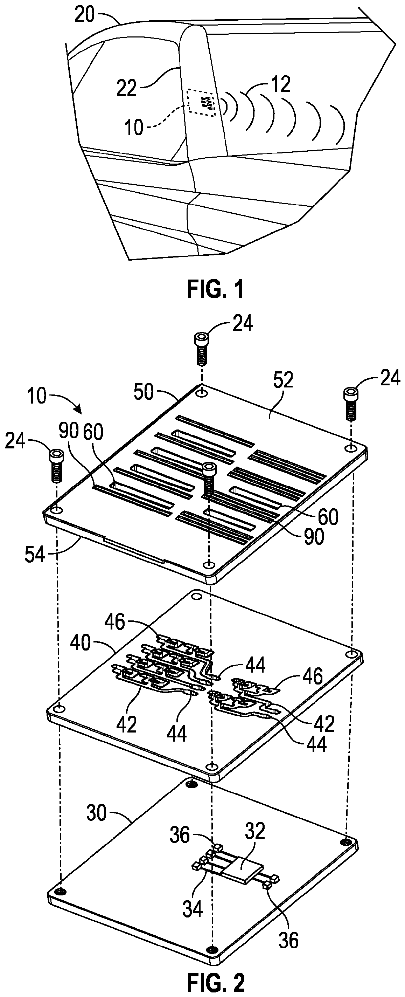

FIGS. 1 and 2 illustrate an exemplary antenna assembly 10 in accordance with the present disclosure. The antenna assembly 10 is configured for use in any suitable application, such as an automotive application. In the example of FIG. 1, the antenna assembly 10 is mounted to a vehicle 20. The antenna assembly 10 may be mounted to any suitable location of the vehicle 20, such as on an A-pillar 22 of the vehicle 20. The antenna assembly 10 is configured to transmit and/or receive radio frequency (RF) signals 12 to a focus area offset from an azimuth center of the antenna assembly. The antenna assembly 10 is thus particularly suited for being mounted as a side radar. In the example of FIG. 1, the RF signals 12 are directed towards a focus area at a front of the vehicle 20, even though a conductive top plate of the antenna assembly 10 faces towards a side of the vehicle 20, or towards a front corner of the vehicle 20. The antenna assembly 10 may be configured for any other suitable automotive or non-automotive use as well.

With particular reference to FIG. 2, the antenna assembly 10 generally includes a circuit board 30, a waveguide plate 40, and a conductive top plate 50. The circuit board 30, the waveguide plate 40, and the conductive top plate 50 are secured together in any suitable manner, such as with any suitable fasteners 24. The waveguide plate 40 is secured between the circuit board 30 and the conductive top plate 50.

The circuit board 30 includes an integrated circuit (IC) 32 configured to process radio frequency (RF) signals. Extending from the IC 32 are conductive traces 34, which are electrically connected to the IC 32. Conductive pads 36 are at distal ends of the traces 34. The pads 36 and the traces 34 are configured to electrically conduct RF signals to and from the IC 32.

Mounted over the circuit board 30 is the waveguide plate 40. The waveguide plate 40 defines a plurality of waveguides 42. The waveguides 42 extend from feeding holes 44. The feeding holes 44 are aligned with the pads 36 of the circuit board 30. RF signals transmitted from the IC 32 are conducted along the traces 34 to the pads 36, and through the feeding holes 44 of the waveguide plate 40 to the waveguides 42. Conversely, received RF signals are directed by the waveguides 42 to the feeding holes 44 and to the IC 32 by way of the pads 36 and the traces 34. Distal ends 46 of the waveguides 42 opposite to the feeding holes 44 are positioned and shaped to correspond with slots of the conductive top plate 50, as explained herein.

The conductive top plate 50 has an outer surface 52 and an inner surface 54. The outer surface 52 is opposite to the inner surface 54. The inner surface 54 faces the waveguide plate 40. The outer surface 52 is an outer surface of the antenna assembly 10. The conductive top plate 50 is made of any suitable conductive material, such as any suitable metallic material.

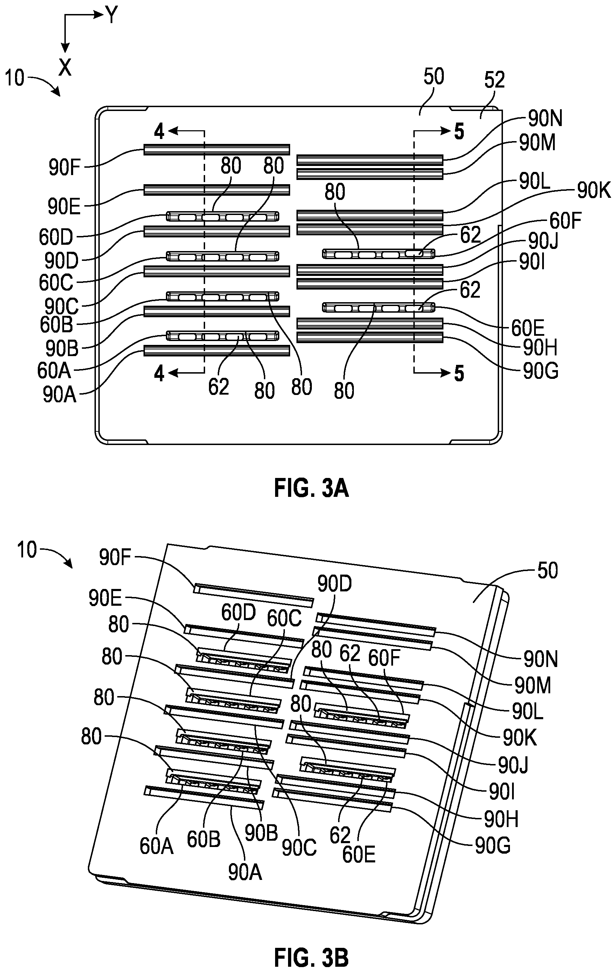

With continued reference to FIG. 2, and additional reference to FIGS. 3A and 3B, the conductive top plate 50 defines a plurality of antennas. Any suitable number of antennas may be included. The antennas may be configured as transmitter antennas, receiver antennas, or transceiver antennas. In the example illustrated, the conductive top plate 50 defines a first antenna 60A, a second antenna 60B, a third antenna 60C, a fourth antenna 60D, a fifth antenna 60E, and a sixth antenna 60F. The antennas 60A-60D may be configured as receivers. The antennas 60E and 60F may be configured as transmitters. In the example illustrated, the receiver antennas 60A-60D are arranged in a first column and the transmitter antennas 60E, 60F are arranged in a second column that is parallel to the first column.

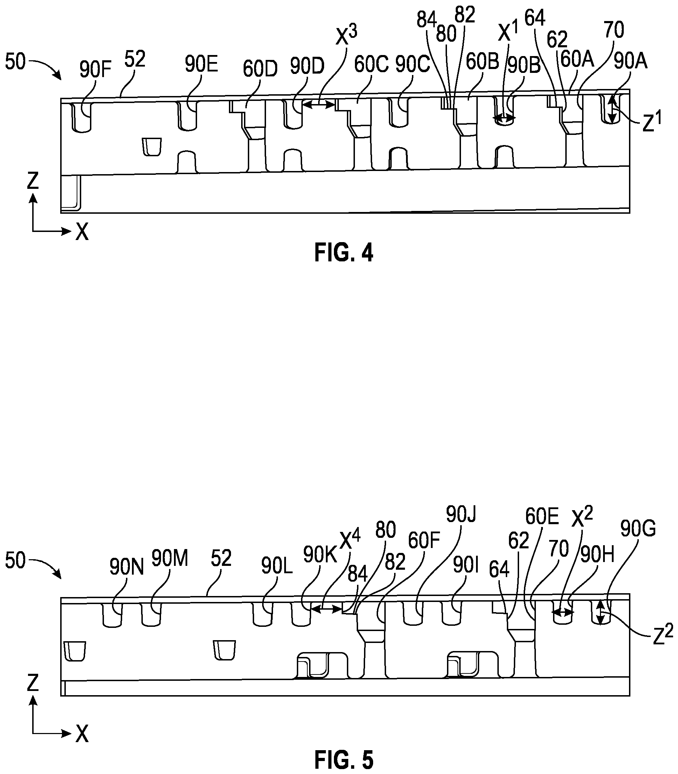

Each one of the antennas 60A-60D includes a plurality of slots 62. The slots 62 extend through the conductive top plate 50 to the waveguide plate 40. The slots 62 are aligned with the distal ends 46 of the waveguides 42. The slots 62 are configured to direct received RF signals to the distal ends 46 of the waveguides 42 and/or direct RF signals away from the distal ends 46 of the waveguides 42 during RF transmission. Each one of the antennas 60A-60D includes a receptacle 70 (FIGS. 4 and 5) defined by the conductive top plate 50. Openings 64 of the slots 62 are defined within the receptacles 70.

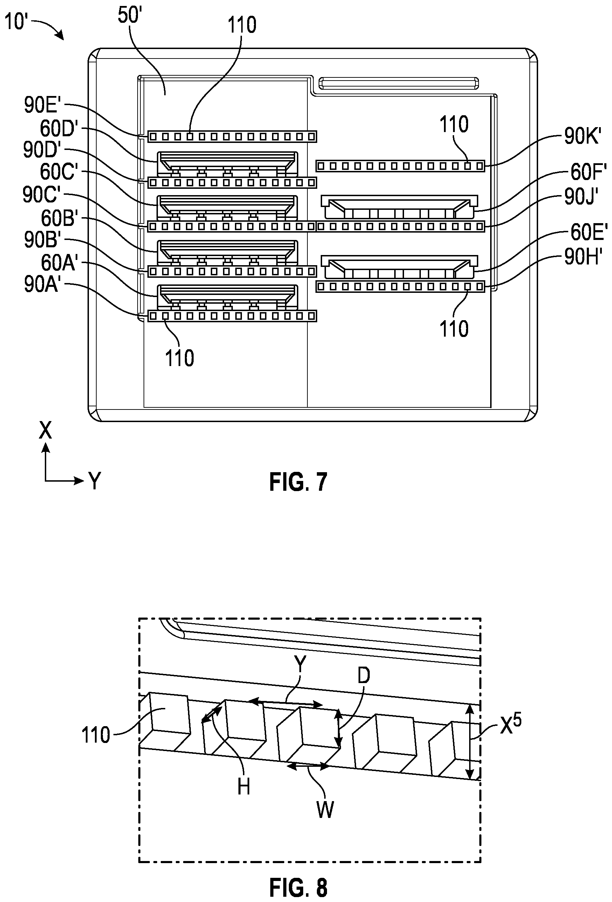

Adjacent to each receptacle 70 is a notch 80 defined by the conductive top plate 50. The notch 80 may extend along an entire length of the adjacent receptacle 70, or along less than the entire length. The notch 80 defines a step between the slots 62 and the conductive top plate 50. With particular reference to FIGS. 4 and 5, the notch 80 includes a first surface 82 and a second surface 84. The first surface 82 and the second surface 84 may be arranged at a right angle, or about a right angle. The first surface 82 may be considered a tread surface of the step and the second surface 84 may be considered as a riser surface of the step. Each one of the notches 80 is on the same side of the associated receptacle 70. The notches 80 are configured to steer the RF signal 12 to emanate from the outer surface 52 of the conductive top plate 50 towards the focus area, as illustrated in FIG. 8.

The conductive top plate 50 further includes a plurality of grooves 90. The grooves 90 are defined by the top plate 50 below the outer surface 52. Any suitable number of grooves 90 may be included. In the example of FIGS. 3A, 3B, 4, and 5, the conductive top plate 50 includes fourteen grooves 90A-90N. The grooves 90 are generally arranged on opposite sides of each one of the antennas 60 to create a boundary between neighboring antennas 60 to allow each antenna 60 to have its own unique aperture. Each one of the plurality of antennas 60 and each one of the plurality of grooves 90 extend parallel to one another. Antenna surface waves travel orthogonal to the long dimensions of the antennas 60 and thus the grooves 90 are transverse to the surface wave propagation.

The grooves 90 are generally configured as quasi artificial magnetic conductors (AMC). The grooves 90 use one period of AMCs, thus configuring the grooves 90 as quasi-AMCs. The grooves 90 act like fences around each antenna 60 to make sure antenna energy from neighboring antennas 60 does not overlap, which improves antenna isolation and increases correlation between the antennas 60.

FIGS. 2, 3A, and 3 illustrate an exemplary arrangement of grooves 90 and antennas 60. In the example illustrated, and with respect to the receiver antennas 60A-60D, a first groove 90A and a second groove 90B are on opposite sides of the first receiver antenna 60A. The second groove 90B and a third groove 90C are on opposite sides of a second receiver antenna 60B. The third groove 90C and a fourth groove 90D are on opposite sides of a third receiver antenna 60C. The fourth groove 90D and a fifth groove 90E are on opposite sides of a fourth receiver antenna 60D. On a side of the fifth groove 90E opposite to the fourth receiver antenna 60D is a sixth groove 90F. The receiver grooves 90A-90F are within the first column along with the receiver antennas 60A-60D.

With respect to the transmitter antennas of the conductive top plate 50, each one of a first transmitter antenna 60E and a second transmitter antenna 60F is between two pair of grooves. More specifically, the first transmitter antenna 60E is between a first pair of grooves including a seventh groove 90G and an eighth groove 90H, and between a second pair of grooves including a ninth groove 901 and a tenth groove 90J. The second transmitter antenna 60F is between the second pair of grooves including the ninth groove 901 and the tenth groove 90J, and between a third pair of grooves including an eleventh groove 90K and a twelfth groove 90L. On a side of the third pair of grooves opposite to the second transmitter antenna 60F is a fourth pair of grooves including a thirteenth groove 90M and a fourteenth groove 90N. The transmitter grooves 90G-90N are aligned in the second column along with the transmitter antennas 60E, 60F.

The arrangement of grooves 90A-90N as illustrated is for exemplary purposes only. Any other suitable number of the grooves 90 and the antennas 60 may be included. The arrangement of the grooves 90 and the antennas 60 may vary based on the application and the desired radiation pattern, for example.

The grooves 90 may have any suitable depth and width, and may be spaced apart from the antennas 60 at any suitable distance. For example, FIG. 4 is a cross-sectional view taken along line 4-4 of FIG. 3A showing the receiver antennas 60A-60D and the associated grooves 90A-90F. The grooves 90A-90F each have a depth Z¹ and a width X¹. The depth Z¹ may be any suitable depth, such as 1.6mm or about 1.6mm. The width X¹ may be any suitable width, such as 1.0mm or about 1.0mm.

FIG. 5 is a cross-sectional view taken along line 5-5 of FIG. 3A showing transmitter antennas 60E and 60F, and the associated grooves 90G-90N. The grooves 90G-90N have a depth Z² and a width X². The depth Z² may be any suitable depth, such as 1.2mm or about 1.2mm. The width X² may be any suitable width, such as 1.0mm or about 1.0mm. Thus, the grooves 90A-90F associated with the receiver antennas 60A-60D are generally deeper than the grooves 90G-90N of the transmitter antennas 60E, 60F.

The depths and widths of the grooves 90A-90N may be varied based on the application and the desired radiation pattern. In general, the deeper the grooves 90A-90N the higher the gain at further angles. Relatively shallower grooves 90A-90N allow for increased correlation between the receiver antennas 60A-60F.

The grooves 90A-90F may be spaced apart from the associated antennas 60A-60F at any suitable distance. With respect to the receiver antennas 60A-60D, the adjacent grooves 90 are spaced apart from the notches 80 at a distance X³ (FIG. 4). With respect to the transmitter antennas 60E and 60F, the adjacent grooves 90 are spaced apart from the notches 80 at a distance of X⁴ (FIG. 5). The distances X³ and X⁴ may be any suitable distance, such as, but not limited to, 0.4mm, 0.9mm, or 1.4mm for example. In general, the greater the distance X³ the greater the correlation between the antennas 60A-60D, and the greater the distance X⁴ the greater the correlation between the antennas 60E and 60F.

The grooves 90 improve isolation between the antennas 60. But, the antennas 60 may still be impacted by features beyond the grooves 90. Thus, additional grooves 90 may be included beyond the antenna 60D and beyond the antenna 60F, for example. The grooves 90E, 90F beyond the outermost receiver antenna 60D, and the grooves 90K-90N beyond the outermost transmitter antenna 60F, allow for the outer antennas 60D and 60F to have the same electromagnetic interactions as the interior antennas 60A-60C and 60E, 60F. For example, and with respect to FIGS. 3A and 3B, the additional outer grooves 90E, 90F help antenna 60D behave more like antenna 60C, thereby improving correlation.

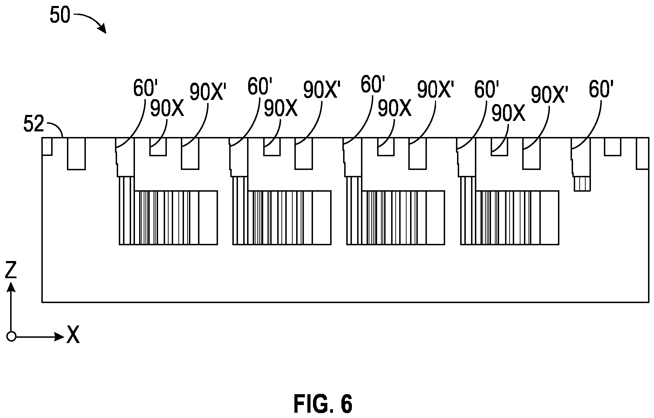

FIG. 6 is a cross-sectional view of another configuration in accordance with the present disclosure for the conductive top plate 50. In the example of FIG. 6, the antennas 60' are configured without the notches 80. As mentioned above, the notches 80 are configured to steer the RF signal 12 to emanate towards the focus area. To steer the RF signal 12, the conductive top plate 50 of FIG. 6 includes grooves 90X and 90X' of different depths. Specifically, the grooves 90X have a first depth and the grooves 90X' have a second depth that is deeper than the first depth of the grooves 90X. The first depth may be 0.9mm, or about 0.9mm, into the conductive top plate 50 in the Z-direction from the outer surface 52. The second depth may be 1.6mm, or about 1.6mm, into the conductive top plate 50 in the Z-direction from the outer surface 52. The grooves 90X are slightly shorter or more narrow in the X-direction (0.8mm or about 0.8mm) than the grooves 90X' (0.9mm or about 0.9mm). Each one of the grooves 90X is between one of the grooves 90X' and one of the antennas 60'. Each one of the grooves 90X' is between one of the antennas 60' and one of the grooves 90X.

In the example of FIG. 6, the RF signal 12 is pointed to the left in a negative X-direction. The grooves 90X with the relatively shallow first depth (0.9mm or about 0.9mm) are more reactive to the radiation pattern and cancel out radiation in a positive X-direction (to the right in FIG. 6). The grooves 90X' with the relatively deeper second depth (1.6mm or about 1.6mm) are less reactive because they aren't close to a quarter-wavelength in size (about 1.0mm). It is advantageous to make the grooves 90X' less reactive because the grooves 90X' are in the direction of desired radiation. Including the grooves 90X' closer to the antennas 60' than the grooves 90X in the desired direction of radiation (right to left in FIG. 6) provides a gradual "runway" transition that effectively increases the distances between the antennas 60'. It is desirable to have the antennas 60' as effectively far apart as possible to give the radiation a "runway" in the negative X-direction before the radiation sees a highly resonant cavity.

FIG. 7 illustrates another antenna assembly 10' in accordance with the present disclosure including a top plate 50'. The antenna assembly 10' is similar to the antenna assembly 10. Thus, similar features are identified with the same reference numbers in FIGS. 7 and 8, but with the addition of the prime (') designation. With respect to the similar features, the description set forth above for the antenna assembly 10 also applies to the antenna assembly 10'.

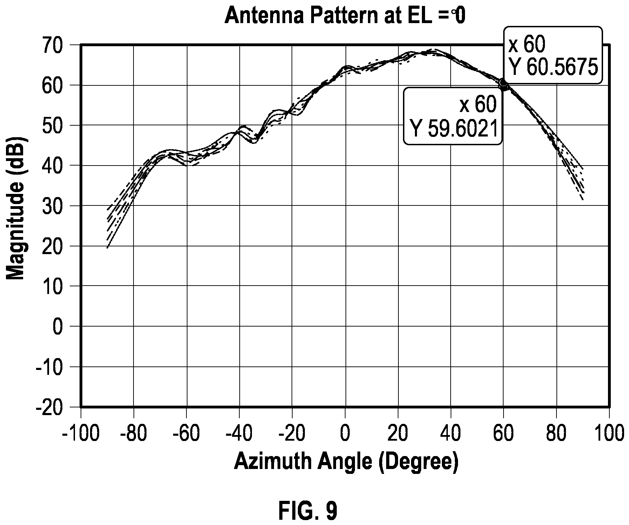

Like the antenna assembly 10, the antenna assembly 10' includes a plurality of antennas 60A'-60F', and a plurality of grooves 90', such as grooves 90A'-90E', 90H', 90J', and 90K'. The grooves 90' may include various surface features therein. For example and as illustrated in FIGS. 7 and 9, the grooves 90' may include posts 110. The posts 110 are spaced apart along the lengths of the grooves 90' in the Y-direction. The posts 110 may have any suitable height, width, and depth dimensions to configure the antenna assembly 10' to generate a desired radiation pattern. For a 77 GHz radar, for example, each post 110 may include a height H of 1.00mm, a width W of 0.8mm, and a depth D of 0.8mm (or a height H of about 1.0mm, a width W of about 0.8mm, and a depth D of about 0.8mm). The posts 110 may be spaced apart at a distance Y of 1.6mm (or about 1.6mm). The grooves 90' may have a width in the X-direction X⁵ of 1.6mm or about 1.6mm. The antenna assembly 10' does not include the grooves 90F, 90G, 90I, or 90L-90N in the example of FIG. 6. However, in some applications these additional grooves may be included to further improve correlation.

The present disclosure provides numerous advantages. For example, the following is an exemplary S-matrix for an antenna including the grooves 90, 90' of the present disclosure (such as the antennas 10, 10' for example), which shows that isolation (off-diagonal numbers) increases by about 6.0 dB or more as compared to antennas without the grooves 90, 90':

| **[S]** | **R1** | **R2** | **R3** | **R4** | **T1** | **T2** |
|---|---|---|---|---|---|---|
| **R1** | -21.5 | -30.5 | -38.0 | -42.6 | -73.9 | -73.2 |
| **R2** | -30.5 | -20.2 | -30.3 | -37.6 | -70.4 | -72.1 |
| **R3** | -38.0 | -30.3 | -20.2 | -30.1 | -72.7 | -70.3 |
| **R4** | -42.6 | -37.6 | -30.1 | -23.7 | -79.8 | -72.1 |
| **T1** | -73.9 | -70.4 | -72.7 | -79.8 | -16.0 | -31.3 |
| **T2** | -73.2 | -72.1 | -70.3 | -72.1 | -31.3 | -16.4 |

FIG. 9 illustrates an exemplary radiation pattern of an antenna assembly in accordance with the present disclosure, such as the antenna assembly 10 or 10' for example. As illustrated in FIG. 9, at an azimuth angle of 60° the widest spread in magnitude between the antennas 60A-60F is only 0.9654 dB (60.5675 dB - 59.6021 dB), which is relatively smaller as compared to side radar antennas without the grooves 90. The grooves 90 of the present disclosure thus improve correlation between the antennas 60A-60F.

The following is an exemplary S-matrix for an antenna including the grooves 90X, 90X' of the present disclosure (such as the antennas 10, 10' modified to include the grooves 90X, 90X' for example), which shows that isolation (off-diagonal numbers) increases as compared to antennas without the grooves 90X, 90X':

| **[S]** | **R1** | **R2** | **R3** | **R4** |
|---|---|---|---|---|
| **R1** | -18.5 | -26.9 | -34.1 | -38.2 |
| **R2** | -26.9 | -18.9 | -26.9 | -33.9 |
| **R3** | -34.1 | -26.9 | -18.8 | -26.7 |
| **R4** | -38.2 | -33.9 | -26.7 | -18.6 |

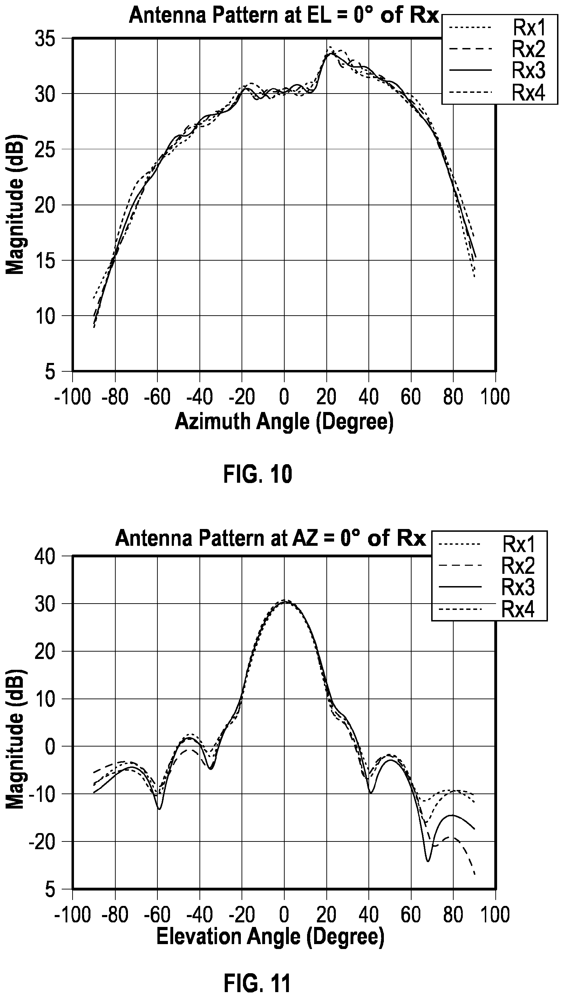

FIG. 10 illustrates an exemplary radiation pattern of an antenna assembly in accordance with the present disclosure including the grooves 90X, 90X' in the configuration illustrated in FIG. 6, for example. As illustrated in FIG. 10, the grooves 90X, 90X' facilitate concentration of radiation at an azimuth angle of about 20° from center. The depths of the grooves 90X, 90X' in the X-direction may be modified in any suitable manner to vary the degree of the azimuth angle from center to provide a side-facing antenna in accordance with the present disclosure. FIG. 11 illustrates an exemplary elevation radiation pattern for an antenna assembly including the grooves 90X, 90X'. As shown in FIG. 11, radiation magnitude is greatest at an elevation angle of 0°.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly. But the relative orientations of the antennas 60 and the grooves 90, 90X, 90X' must be as illustrated. The surface radiation wave travels orthogonal to the long dimensions of the antennas 60, and the grooves 90 must be transverse to the surface wave propagation.

## Claims

1. An antenna assembly configured to steer a radio frequency (RF) signal to a focus area offset from an azimuth center, the antenna assembly comprising:
a circuit board including an integrated circuit configured to process the RF signal, and a conductive trace extending from the integrated circuit;
a waveguide plate over the circuit board, the waveguide plate including a waveguide configured to guide the RF signal at least one of to and from the conductive trace; and
a conductive top plate over the waveguide plate, the conductive top plate including,
an outer surface and an inner surface facing the waveguide plate, the outer surface is opposite to the inner surface,
a plurality of antennas defined within the outer surface and aligned with the waveguide, the plurality of antennas configured to direct the RF signal to the focus area offset from the azimuth center, and
a plurality of grooves defined within the outer surface spaced apart from the plurality of antennas, at least one of the plurality of grooves is between two of the plurality of antennas, the plurality of grooves configured to provide RF boundaries between the plurality of antennas,
wherein the plurality of antennas in particular include a plurality of receiver antennas and a plurality of transmitter antennas,
wherein the antenna assembly in particular includes more of the plurality of receiver antennas than the plurality of transmitter antennas.

2. The antenna assembly of claim 1, wherein the plurality of receiver antennas are aligned on the outer surface in a first column and the plurality of transmitter antennas are aligned on the outer surface in a second column that is spaced apart from, and parallel to, the first column.

3. The antenna assembly of claim 1 or 2, wherein each one of the plurality of antennas and each one of the plurality of grooves extend parallel to one another, and/or
wherein at least one of the plurality of grooves is not between two of the plurality of antennas.

4. The antenna assembly of any one of the preceding claims, wherein:
the plurality of antennas include a plurality of receiver antennas and a plurality of transmitter antennas,
the plurality of grooves include receiver grooves adjacent to the plurality of receiver antennas and transmitter grooves adjacent to the plurality of transmitter antennas; and
the receiver grooves are deeper than the transmitter grooves,
wherein the receiver antennas and the transmitter antennas in particular have a common width.

5. The antenna assembly of any one of the preceding claims, wherein the plurality of grooves include a plurality of posts spaced apart along a length of each one of the plurality of grooves,
wherein each one of the plurality of posts in particular has a height dimension, a width dimension, and a depth dimension with the height dimension being greater than each one of the width dimension and the depth dimension.

6. The antenna assembly of any one of the preceding claims, wherein the plurality of grooves includes first grooves of a first depth and second grooves of a second depth that is deeper than the first depth, each one of the first grooves is between one of the plurality of antennas and one of the second grooves, and each one of the second grooves is between one of the plurality of antennas and one of the first grooves.

7. An antenna assembly configured to steer a radio frequency (RF) signal to a focus area offset from an azimuth center, the antenna assembly comprising:
a circuit board including an integrated circuit configured to process the RF signal, and a conductive trace extending from the integrated circuit;
a waveguide plate over the circuit board, the waveguide plate including a waveguide configured to guide the RF signal at least one of to and from the conductive trace; and
a conductive top plate over the waveguide plate, the conductive top plate including,
an outer surface and an inner surface facing the waveguide plate, the outer surface is opposite to the inner surface,
a plurality of receiver antennas aligned with the waveguide,
a plurality of receiver grooves defined by the outer surface spaced apart from the receiver antennas, one of the plurality of receiver antennas is between two of the plurality of receiver grooves, the plurality of receiver grooves configured to provide RF boundaries between the plurality of receiver antennas,
a plurality of transmitter antennas aligned with the waveguide, and
a plurality of transmitter grooves defined by the outer surface spaced apart from the transmitter antennas, one of the plurality of transmitter antennas is between two of the plurality of transmitter grooves, the plurality of transmitter grooves configured to provide RF boundaries between the plurality of transmitter antennas.

8. The antenna assembly of claim 7, wherein the plurality of receiver grooves are deeper than the plurality of transmitter grooves.

9. The antenna assembly of claim 8, wherein the plurality of receiver grooves and the plurality of transmitter grooves have an equal width.

10. The antenna assembly of any one of claims 7 - 9, wherein two of the plurality of transmitter grooves are between two of the plurality of transmitter antennas.

11. The antenna assembly of any one of claims 7 - 10, wherein the plurality of receiver grooves and the plurality of transmitter grooves include spaced apart posts.

12. The antenna assembly of any one of claims 7 - 11, wherein the plurality of receiver grooves includes first grooves of a first depth and second grooves of a second depth that is deeper than the first depth, each one of the first grooves is between one of the plurality of receiver antennas and one of the second grooves, and each one of the second grooves is between one of the plurality of receiver antennas and one of the first grooves.

13. An antenna assembly configured to steer a radio frequency (RF) signal to a focus area offset from an azimuth center, the antenna assembly comprising:
a circuit board including an integrated circuit configured to process the RF signal, and a conductive trace extending from the integrated circuit;
a waveguide plate over the circuit board, the waveguide plate including a waveguide configured to guide the RF signal at least one of to and from the conductive trace; and
a conductive top plate over the waveguide plate, the conductive top plate including,
an outer surface and an inner surface facing the waveguide plate, the outer surface is opposite to the inner surface,
a plurality of receiver antennas aligned with the waveguide and arranged in a first column,
a plurality of receiver grooves defined by the outer surface spaced apart from the receiver antennas, one of the plurality of receiver antennas is between two of the plurality of receiver grooves, the plurality of receiver grooves configured to provide RF boundaries between the plurality of receiver antennas,
a plurality of transmitter antennas aligned with the waveguide and arranged in a second column extending parallel to the first column, and
a plurality of transmitter grooves defined by the outer surface spaced apart from the transmitter antennas, one of the plurality of transmitter antennas is between two of the plurality of transmitter grooves, the plurality of transmitter grooves configured to provide RF boundaries between the plurality of transmitter antennas;
wherein the plurality of receiver grooves are deeper than the plurality of transmitter grooves.

14. The antenna assembly of claim 13, wherein the plurality of receiver grooves are aligned in the first column and the plurality of transmitter grooves are aligned in the second column.

15. The antenna assembly of claim 14, wherein the plurality of receiver grooves and the plurality of transmitter grooves include spaced apart posts.
